# EUROPÄISCHE PATENTSCHRIFT

(11) **EP 3 025 587 B1**
(45) Veröffentlichungstag und Bekanntmachung des Hinweises auf die Patenterteilung: **13.09.2017**
(21) Anmeldenummer: 14194999.0
(22) Anmeldetag: 26.11.2014
(51) Int. Cl.: A22C 11/00, A22C 17/00

(54) **Vorrichtung und Verfahren zur Übergabe von Wurstportionen**
Device and method for transferring sausage portions
Dispositif et procédé destinés au transfert de portions de saucisses

(43) Veröffentlichungstag der Anmeldung: 01.06.2016
(73) Patentinhaber: Albert Handtmann Maschinenfabrik GmbH & Co. KG, 88400 Biberach (DE)
(72) Erfinder: Heim, Michael, 88400 Biberach (DE); Reutter, Siegfried, 88436 Eberhardzell (DE); Fischer, Thomas, 88484 Gutenzell (DE); Willburger, Peter, 88255 Baindt (DE)
(74) Vertreter: Grünecker Patent- und Rechtsanwälte PartG mbB

(56) Entgegenhaltungen:
- EP-A1- 1 712 135
- EP-A2- 2 364 596
- DE-A1-102004 056 038
- US-A- 5 057 055
- US-A1- 2008 257 683

## Beschreibung

Die Erfindung betrifft eine Vorrichtung und ein Verfahren zur Übergabe von Wurstportionen gemäß den Oberbegriffen der Ansprüche 1 und 11.

Aus der US 505705 5A ist bereits eine Einrichtung und ein Verfahren gemäß den Oberbegriffen der Ansprüche 1 und 11 bekannt. Diese Druckschrift zeigt ebenfalls bereits eine Einrichtung zum seitlichen Ausstoßen von Wurstgruppen mit einem Ausstoßer. Die Wurstgruppen werden in Behältnisse auf anderen Transportmittel ausgestoßen. Das Dokument US 2008/257683 offenbart ebenfalls eine Vorrichtung und ein Verfahren, welche die obengenannten Merkmale auch einschließen. Bei der vollautomatischen Verarbeitung von einzelnen oder zusammenhängenden Wurstportionen, z.B. bei der Zuführung zu Verpackungseinrichtungen, ist es häufig erforderlich, den Produktstrom aufzuteilen bzw. auf eine andere Transporteinheit, z.B. auf ein anderes Transportband, zu übergeben. Dabei kann der Weitertransport der Produkte nach der Übergabe parallel zum Zuführband (0°) aber auch unter einem Winkel zum Zuführband erfolgen.

So ist es beispielsweise aus der EP 1712135 bekannt, Wurstportionen von einem Transportband in eine Trommel zu übergeben, in diesem Fall also unter einem Winkel von 90°.

Im Stand der Technik war es bislang nicht möglich, die einzelnen Wurstportionen, von einem Transportmittel, wie beispielsweise einem Transportband, auf ein anderes zu übergeben und dabei eine korrekte Ausrichtung der Würste beizubehalten. Aus diesem Grund mussten die einzelnen Wurstportionen, wie zuvor erläutert, in Magazine mit entsprechenden Aufnahmen, die die Wurstportionen ausgerichtet haben, ausgestoßen werden. Dies wird insbesondere deutlich, wenn man die hohen Verarbeitungsgeschwindigkeiten von 600 Einzelwurstportionen pro Minute betrachtet.

Hiervon ausgehend liegt der vorliegenden Erfindung die Aufgabe zugrunde, eine Vorrichtung und ein Verfahren zum Übergeben von Wurstportionen bereitzustellen, die ermöglichen, dass bei der Übergabe einer Wurstportion von einem Zuführtransportmittel auf ein Abtransportmittel, die Wurstportion korrekt ausgerichtet bleibt.

Erfindungsgemäß wird diese Aufgabe durch die Merkmale der Ansprüche 1 und 11 gelöst.

Gemäß der vorliegenden Erfindung weist das Abtransportmittel eine untere Transporteinrichtung und eine darüberliegende Halteeinrichtung auf, zwischen denen die mindestens eine Wurstportion transportiert wird. Somit kann, wenn mindestens eine Wurstportion von dem Zuführtransportmittel ausgestoßen wird, die mindestens eine Wurstportion bei der Übergabe zwischen der Transporteinrichtung und der darüberliegenden Halteeinrichtung sicher aufgenommen und gehalten werden. Die Wurst kann eine korrekte Ausrichtung behalten. Eine sichere Übergabe der mindestens einen Wurstportion von dem Zuführtransportmittel auf das Abtransportmittel ist somit möglich.

Durch die Halteeinrichtung wird die entsprechende Wurstportion, die auf dem Zuführtransportmittel in eine erste Transportrichtung T₁ mit einer ersten Fördergeschwindigkeit bewegt wird, und auch bei der Übergabe noch eine Bewegungskomponente bzw. Impuls in Transportrichtung T₁ aufweist, wirksam abgebremst und kann so genau platziert werden.

Unter dem Ausdruck "Wurstportion" versteht man eine Einzelwurst, wobei auch mehrere Wurstportionen, d.h. Einzelwürste, die hintereinander in Tränsportrichtung auf dem Zuführtransportmittel antransportiert werden, gleichzeitig von einer Ausstoßeinrichtung auf das Abtransportmittel ausgestoßen werden können. Die Einzelportionen, d.h. Einzelwürste, können dabei voneinander getrennt sein oder aber auch als Wurstkette vorliegen. Als Zuführtransportmittel dient beispielsweise ein Transportband, Rollenteppich etc. Es kann nur ein Abtransportmittel vorgesehen sein, gemäß einer besonderen Ausführungsform können jedoch auch mehrere Abtransportmittel hintereinander mit entsprechenden Ausstoßeinrichtungen vorgesehen sein.

Bei der vorliegenden Erfindung ist es nicht notwendig, dass sich die Halteeinrichtung über die gesamte Länge der Transporteinrichtung erstreckt. Wesentlich ist nur, dass sich die Halteeinrichtung oberhalb eines Anfangsbereichs der Transporteinrichtung befindet. Unter Anfangsbereich versteht man vorzugsweise zumindest die ersten 5 cm vom Vorderende (das dem Zuführtransportmittel zugewandte Ende) betrachtet, d.h. dass die Halteeinrichtung in diesem Bereich die Wurstportion greifen bzw. halten kann.

Die Halteeinrichtung ist vorzugsweise ebenfalls als umlaufendes Transportmittel, insbesondere Transportband, Rolle oder Rollenteppich ausgebildet. Vorteilhafterweise kann dann beispielsweise die untere Transporteinrichtung als umlaufendes Transportband ausgebildet sein und die Halteeinrichtung als darüber angeordnetes umlaufendes Transportband, das sich zumindest über einen Teil der Länge des unteren Transportbands erstreckt. Es ist aber auch möglich, im Anfangsbereich der Transporteinrichtung eine Rolle vorzusehen, die dann entweder angetrieben ist und wie die vorher beschriebenen umlaufenden Transportmittel mit der gleichen Geschwindigkeit wie die Transporteinrichtung angetrieben werden kann oder die frei drehbar gelagert ist. Es ist auch möglich, die Halteeinrichtung als Gleitblech auszubilden, das zumindest im Anfangsbereich der Transporteinrichtung vorgesehen ist, und an dem die in der zweiten Transportrichtung T₂ transportierten Wurstportionen entlanggleiten. Wenn das Gleitblech federnd angeordnet ist, kann es die Wurstportionen ausreichend halten, jedoch wenn nötig Ausgleichsbewegungen nach oben durchführen.

Vorteilhafterweise ist der Abstand zwischen der Halteeinrichtung und der Transporteinrichtung über einen Einstellmechanismus einstellbar. Somit kann der Abstand auf unterschiedliche Wurstkaliber, d.h. Wurstdurchmesser, eingestellt werden. Dabei liegt der Abstand zwischen Halteeinrichtung und der Transporteinrichtung in etwa in einem Bereich von 70 % bis 100 % des Wurstkalibers.

Auch das Zuführtransportmittel kann zumindest im Übergabebereich eine Halteeinrichtung und eine darunter angeordnete Transporteinrichtung aufweisen, zwischen denen die einzelnen Wurstportionen transportiert werden. Die Ausstoßeinrichtung fährt dann zum Ausstoßen zwischen die Halteeinrichtung und die Transporteinrichtung und stößt die Wurstportion auf das Abtransportmittel. Somit ist die Wurstportion während des gesamten Übergabevorgangs sicher gehalten und bleibt korrekt ausgerichtet.

Gemäß der Erfindung weist die Vorrichtung eine Steuerung auf, die einen Antrieb des Abtransportmittels derart steuert, dass es die Wurstportionen mit einer Geschwindigkeit transportiert, um einen vorbestimmten Abstand der Wurstportionen zueinander einzustellen, wobei vorzugsweise die Geschwindigkeit von mindestens einem der folgenden Parameter abhängt:
Transportgeschwindigkeit des Zuführtransportmittels, Taktfrequenz der Ausstoßeinrichtung, eingestellter Sollabstand der Wurstportionen in Transportrichtung T₂ des Abtransportmittels, Wurstkaliber, Anzahl der ausgestoßenen Portionen. Somit kann gemäß der vorliegenden Erfindung der Abstand zwischen Wurstportionen auf dem Abtransportmittel genau eingestellt werden und auch diverse Gruppierungsaufträge, bei denen Wurstgruppen, in denen Einzelwurstportionen einen bestimmten Abstand zueinander aufweisen, erzeugt werden können, wobei die einzelnen Wurstgruppen wiederum einen vorbestimmten Abstand zueinander aufweisen. Die Geschwindigkeit des Abtransportmittels kann auch variabel sein, beispielsweise um verschiedene Gruppenlücken zu erzeugen, oder wenn im taktenden Betrieb einzelne Wurstportionen direkt hintereinander im Abtransportmittel positioniert werden sollen.

Die Vorrichtung kann auch mehrere, in Transportrichtung T₁ betrachtet, hintereinander angeordnete Ausstoßeinrichtungen aufweisen. Damit können die Wurstportionen auf entsprechende mehrere Abtransportmittel übergeben werden. Dabei können die Würste auf die gleiche Seite abgeschoben werden oder auf gegenüberliegende Seiten ausgestoßen werden, d.h. dass die Abtransportmittel dann auf beiden Seiten des Zuführtransportmittels liegen.

Das mindestens eine Abtransportmittel verläuft in einer zweiten Transportrichtung, die unter einem Winkel von 0° bis 100°, vorzugsweise 0° bis 90° zur Transportrichtung T₁ des Zuführtransportmittels verläuft. Ist der Winkel 0°, so verläuft das Abtransportmittel parallel zum Zuführtransportmittel. Bei einem Winkel von 90° steht das Abtransportmittel senkrecht zum Zuführtransportmittel. In einem Bereich zwischen 0° bis 90° weist die zweite Transportrichtung T₂ eine Richtungskomponente in Transportrichtung T₁, während bei einem Winkel größer 100° sich das Abtransportmittel wieder schräg nach hinten verläuft, d.h. eine Richtungskomponente aufweist, die der ersten Transportrichtung T₁ entgegengesetzt ist. Das Abtransportmittel bzw. dessen untere Transporteinrichtung kann als durchlaufendes Transportband ausgebildet sein, jedoch auch mehrere parallel zueinander angeordnete Transportbänder bzw. -riemen aufweisen. Der Aufbau mit mehreren Riemen ermöglicht eine Anordnung des Abtransportbandes zum Zuführband unter einem Winkel, der nicht 0° und nicht 90° entspricht, d.h. in einem Winkelbereich zwischen 0° und 90° und größer 90° bis 100°. Durch die Verwendung mehrerer einzelner Riemen kann das Abtransportmittel sehr nah an dem Zuführtransportmittel angeordnet werden, da für jedes einzelne Band der Abstand zum Zuführtransportmittel minimiert werden kann, während bei der Verwendung eines breiten Bandes in diesen Winkelbereichen ein Spalt zwischen Zuführtransportmittel und Abführtransportmittel entstehen würde, der kein sicheres Übergeben ermöglicht. Dabei weist die untere Transporteinrichtung die mehreren nebeneinander angeordneten Transportbänder auf. Es ist auch möglich, dass die Halteeinrichtung mehrere nebeneinander angeordnete umlaufende Transportbänder aufweist.

Die Ausstoßeinrichtung ist vorzugsweise derart ausgebildet und angeordnet, dass sie in einer Richtung senkrecht zur Transportrichtung T₁ des Zuführtransportmittels bewegbar ist. Dabei ist vorteilhafterweise die Ausstoßfläche des Abtransportmittels parallel zur Transportrichtung T₁ angeordnet, so dass die Ausstoßfläche an der Längsseite der Wurstportion ansetzen kann.

Es ist auch möglich, dass die Ausstoßeinrichtung in einer Richtung, die eine Bewegungskomponente senkrecht zur Transportrichtung T₁ des Zuführtransportmittels sowie eine Bewegungskomponente entgegen der Transportrichtung T₁ des Zuführtransportmittels aufweist bewegt wird. Dabei kann insbesondere ein Schwenkmechanismuss vorgesehen sein. Durch die Rückwärtsbewegung kann die Wurstportion, die auf dem Zuführtransportmittel mit einer ersten Geschwindigkeit bewegt wird, bei der Übergabe abgebremst werden, so dass eine sicherere Übergabe möglich ist. Wird die Ausstoßeinrichtung eingeschwenkt, so wird sie nach Übergabe der Wurstportion vorteilhafterweise auf dem gleichen Weg zurück aus dem Bereich des Zuführtransportmittels wegbewegt, um die nachlaufende Wurst nicht zu behindern.

Die Ausstoßfläche der Ausstoßeinrichtung kann schräg oder parallel zur Transportrichtung T₁ des Zuführtransportmittels ausgerichtet sein und sich insbesondere linear unter einem Winkel schräg zur Transporteinrichtung bewegen. Das bedeutet, dass die Ausstoßeinrichtung nicht senkrecht zur Transportrichtung T₁ bewegt wird, sondern schräg dazu. Dies kann vorteilhaft sein, wenn beispielsweise das Abtransportmittel unter einem bestimmten Winkel zum Zuführtransportmittel steht. Dann kann auch die Ausstoßeinrichtung unter diesem Winkel linear bewegt werden und die Ausstoßfläche senkrecht zu dieser Richtung ausgerichtet werden.

Vorteilhafterweise weist die Vorrichtung einen Anschlag auf, der zumindest im Anfangsbereich des Abtransportmittels angeordnet ist und quer zur Transportrichtung T₁ des Zuführtransportmittels steht, um die Wurstportionen in Transportrichtung T₁ des Zuführtransportmittels zu bremsen. Ein entsprechender Anschlag ermöglicht wiederum eine exakte Ausrichtung der Wurst auf dem Abtransportmittel. Der Anschlag kann auch als vertikal angeordnetes Transportband mitlaufend gestaltet sein, z. B. mit gleicher Geschwindigkeit wie das Abtransportmittel.

Es ist besonders vorteilhaft, wenn die Wurstportionen an mehreren Stellen seitlich vom Zuführtransportmittel ausgestoßen werden. Dabei können n₁ Wurstportion(en) an einer ersten Stelle S₁ hintereinander auf das Abtransportband ausgestoßen werden, indem die Ausstoßeinrichtung n₂ mal hintereinander angesteuert wird (n₁, n₂, n₃ E N). Wenn jeweils nur eine Wurstportion zu einem bestimmten Zeitpunkt von der Ausstoßeinrichtung ausgestoßen wird, dann ergibt sich n₁=n₂.

Anschließend wird eine bestimmte Anzahl n₃ an Wurstportion(en) an der ersten Stelle S₁ nicht von der Ausstoßeinrichtung ausgestoßen sondern passiert diese Stelle S₁. Die passierenden Wurstportionen werden dann an mindestens einer weiteren Stelle S₂, S₃ von einer entsprechenden Ausstoßeinrichtung ausgestoßen.

Wenn das erste Abtransportmittel zum Beispiel mit einer konstanten Geschwindigkeit läuft, entsteht ein nicht von Wurstportionen belegter Bereich auf dem ersten Abtransportmittel, d.h. es kann ein Abstand zwischen zwei Wurstgruppen, die jeweils n₁ Wurstportionen aufweisen, erzeugt werden. Wenn an der ersten Stelle S₁ Wurstportionen über die Ausstoßeinrichtung ausgestoßen werden, laufen keine Wurstportionen zu den weiteren Stellen S₂ oder S₃, so dass dann auf den entsprechenden Abtransportmitteln nicht belegte Bereiche entstehen, so dass hier ein Abstand zwischen einzelnen Wurstgruppen, die jeweils eine bestimmte Anzahl an Wurstportionen aufweisen, erzeugt werden kann. Durch eine Anpassung der Geschwindigkeit des Abtransportmittels können diese Lücken noch vergrößert oder verkleinert werden.

Nachdem eine bestimmte Anzahl n₃, die erste Stelle S₁ passiert hat, und ein ausreichender Abstand zwischen den Wurstgruppen erzeugt wurde, folgt wieder der erste Schritt, nämlich dass n₁ Wurstportion(en) hintereinander auf das Abtransportmittel an der Stelle S₁ ausgestoßen werden. Es ist möglich, dass n₁=n₃, n₁ und n₃ können sich jedoch auch unterscheiden, so dass unterschiedliche Gruppierungen bzw. Gruppierungsmuster auf unterschiedlichen Abtransportmitteln erzeugt werden können.

Es ist möglich, dass fehlerhafte Produkte, wie beispielsweise geplatzte oder von der gewünschten Länge oder von einer gewünschten Form abweichende bzw. einer gewünschten Krümmung abweichende Würste am Ende des Zuführtransportmittels ausgeschleust werden. Die fehlerhaften Produkte werden dabei über entsprechende Sensoren detektiert. Wird detektiert, dass es sich um ein fehlerhaftes Produkt handelt, wird die Ausstoßeinrichtung nicht angesteuert und stößt diese Wurstportion nicht auf das Abtransportmittel. Um zu verhindern, dass eine Lücke auf dem Abtransportmittel entsteht, kann durch die Steuerung die Geschwindigkeit des Abtransportmittels entsprechend angepasst werden, d.h., zum Beispiel die Geschwindigkeit kurz verzögert oder das Abtransportmittel kurz gestoppt werden, so dass die Anzahl der ausgeschleusten Produkte ausgeglichen und wieder vervollständigt werden kann.

Es ist insbesondere vorteilhaft, wenn die Krümmungsrichtung der Würste detektiert wird und die Würste mit einer bestimmten gleichen Krümmungsrichtung auf ein entsprechendes Abtransportmittel ausgestoßen werden, d.h. dass Wurstportionen mit einer entgegengesetzten Krümmungsrichtung auf ein weiteres Abtransportmittel ausgestoßen werden oder aber über das Zuführtransportmittel abgeführt werden.

Vorteilhafterweise weist die Halteeinrichtung, insbesondere die Transportrolle oder das Transportband, ein Oberflächenprofil auf. Dies stellt sicher, dass die vom Zuführtransportmittel übergebenden Würste gut von dem Abtransportmittel gegriffen werden können.

Vorteilhafterweise sind zumindest Teile der Ausstoßeinrichtung in oder entgegengesetzt zur Transportrichtung des Zuführtransportmittels bewegbar. Damit kann beispielsweise bei sich verändernden Abständen und Wurstportionslängen die Abstoßposition korrekt eingestellt werden, derart, dass die Mitte einer Wurstportion auch in der Mitte der Ausstoßfläche der Ausstoßeinrichtung zu liegen kommen kann. Dabei kann entweder die komplette Ausstoßeinrichtung in oder entgegen Transportrichtung bewegbar sein, oder aber zumindest ein Teil, der die Ausstoßfläche umfasst.

Vorteilhafterweise umfasst die Vorrichtung einen Sensor, der die Position der Wurstportion, und vorzugsweise die Wurstportionslänge, zu einem Zeitpunkt ermittelt, und die Steuerung in Abhängigkeit entsprechender Signale den Ausstoßzeitpunkt einer der mindestens einen Ausstoßeinrichtung bestimmt. Vorzugsweise befindet sich der Sensor in Transportrichtung vor der mindestens einen Ausstoßeinrichtung .Somit ist stets gewährleistet, dass die Ausstoßeinrichtung zu einem korrekten Zeitpunkt angesteuert wird und die abgestoßene Wurstportion eine korrekte Lage aufweist.

Darüber hinaus kann die Abstoßposition in Transportrichtung T1 variiert werden, so dass die Lage der Wurstportion auf dem Abtransportmittel eingestellt werden kann. Das heißt, die Wurstportionen können entweder weiter vorne oder weiter hinten in Transportrichtung T₁ betrachtet, auf dem Abtransportmittel positioniert werden. Dieser Sensor, der die Position der Wurstportion ermittelt, kann gleichzeitig auch der Sensor sein, der bestimmt ob die entsprechende Wurstportion ausgeschleust wird - beispielsweise die Krümmung der Wurstportion ermittelt und/oder Wurstplatzer etc.

Die Erfindung wird nachfolgend unter Bezugnahme der folgenden Figuren näher erläutert.
Figur 1 zeigt grob schematisch einen Horizontalschnitt durch eine Ausführungsform gemäß der vorliegenden Erfindung mit einem Abtransportwinkel β von 90°.
Figur 2 zeigt grob schematisch einen Längsschnitt durch das in Figur 1 gezeigte Ausführungsbeispiel entlang der Linie I-I.
Figur 3 zeigt grob schematisch das in Figur 1 gezeigte Ausführungsbeispiel mit einem anderen Gruppierungsauftrag.
Figur 4 zeigt einen Längsschnitt entlang der Linie I-I durch das in Figur 3 gezeigte Ausführungsbeispiel mit einem entsprechenden Gruppierungsauftrag.
Figur 5a zeigt eine Seitenansicht eines Zuführtransportmittels mit einer Halteeinrichtung gemäß einem weiteren Ausführungsbeispiel der vorliegenden Erfindung mit einem Abtransportwinkel β von 0°.
Figur 5b zeigt einen Schnitt entlang der Linie II-II mit einem ersten Gruppierungsauftrag.
Figur 5c zeigt die in Figur 5b dargestellte Anordnung mit einem weiteren Gruppierungsauftrag.
Figur 5d zeigt die in Figuren 5b und 5c gezeigten Anordnungen mit noch einem weiteren Gruppierungsauftrag.
Figur 6 zeigt einen Schnitt durch ein in Figur 5b gezeigtes Ausführungsbespiel entlang der Linie III-III.
Figur 7 zeigt einen Horizontalschnitt durch eine weitere Ausführungsform gemäß der vorliegenden Erfindung mit einem Abtransportwinkel von β = 45°.
Figur 8 zeigt einen Horizontalschnitt durch ein weiteres Ausführungsbeispiel gemäß der vorliegenden Erfindung mit zwei Ausstoßstellen zur gleichen Seite und einem Abtransportwinkel β von 90°.
Figur 9 zeigt das in Figur 8 gezeigte Ausführungsbeispiel mit einem anderen Gruppierungsauftrag.
Figur 10 zeigt einen Horizontalschnitt durch eine weitere Ausführungsform mit zwei Ausstoßstellen zu zwei verschiedenen Seiten und einen Abtransportwinkel β von 90°.
Figur 11a zeigt einen Horizontalschnitt durch ein weiteres Ausführungsbeispiel mit zwei Ausstoßstellen und einem Abtransportwinkel β von 0°.
Figur 11b zeigt das in Figur 11a gezeigte Ausführungsbeispiel mit einem weiteren Gruppierungsauftrag.
Figur 11c zeigt das in den Figuren 11a und 11b gezeigte Ausführungsbeispiel mit noch einem weiteren Gruppierungsauftrag.
Figur 12 zeigt eine besondere Ausführungsform einer Ausstoßeinrichtung gemäß der vorliegenden Erfindung.
Figuren 13a bis d zeigen unterschiedliche Ausführungsformen einer Halteeinrichtung für das Abtransportmittel gemäß der vorliegenden Erfindung.

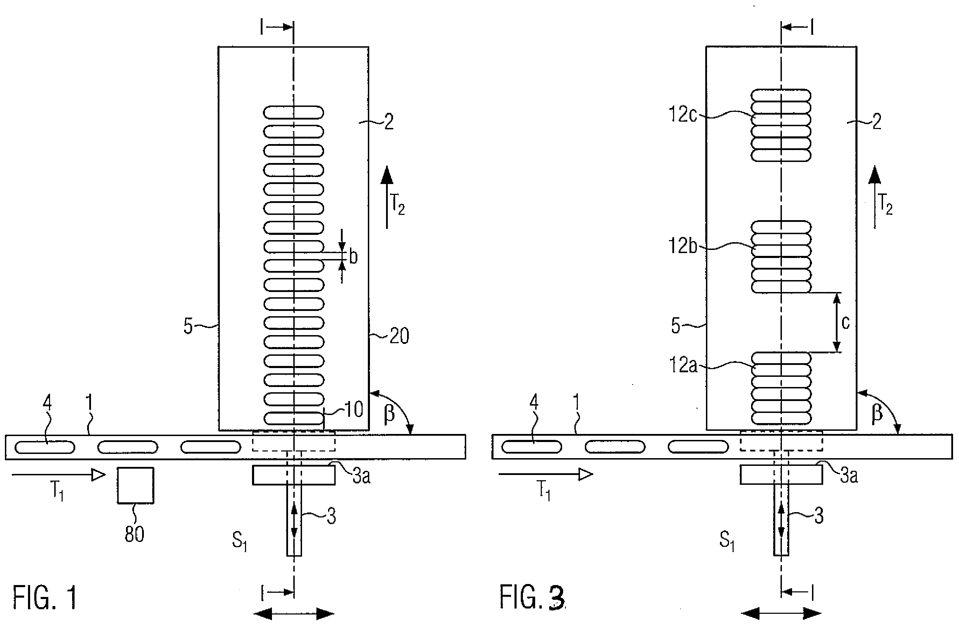

Figur 1 zeigt einen Horizontalschnitt durch ein Ausführungsbeispiel gemäß der vorliegenden Erfindung, wobei der Abtransport- bzw. Übergabewinkel , d.h. der Winkel zwischen der Transportrichtung T₁ eines Zuführtransportmittels 1 und der Transportrichtung T₂ eines Abtransportmittels 2 β = 90° beträgt. Die Vorrichtung umfasst eine Ausstoßeinrichtung 3, die, wie durch den Pfeil dargestellt ist, vor- und zurückbewegbar ist und eine Wurstportion 4 von dem Zuführtransportmittel 1 auf das Abtransportmittel 2 ausstoßen kann.

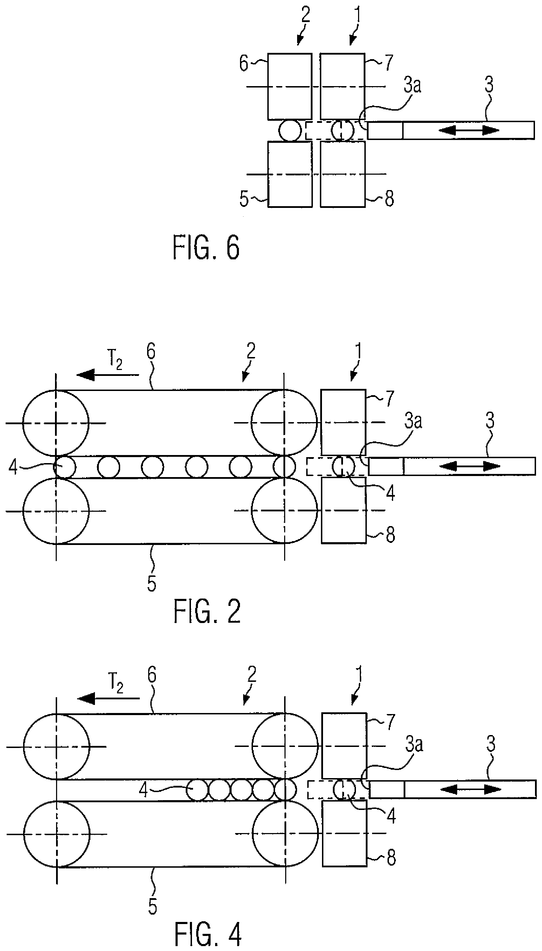

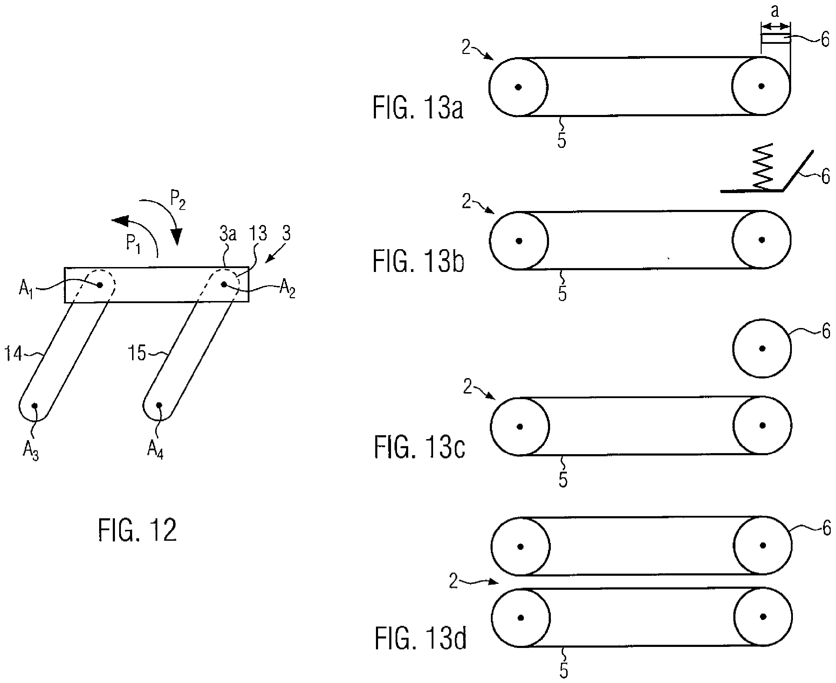

Das Zuführtransportmittel 1 kann als umlaufendes Transportmittel wie beispielsweise ein Transportband, Rollenteppich, etc. mit einem entsprechenden Antrieb ausgebildet sein und sich mit einer ersten Transportgeschwindigkeit v₁ bewegen. Wie insbesondere auch aus Figur 2 hervorgeht, kann das Zuführtransportmittel 1 eine untere Transporteinrichtung 8 umfassen, sowie eine Halteeinrichtung 7, die sich zumindest teilweise über die Länge der unteren Transporteinrichtung erstreckt. Dabei kann sowohl die untere Transporteinrichtung 8 als auch die Halteeinrichtung 7 als umlaufendes Transportmittel ausgebildet sein. Somit entsteht zum Bespiel ein entsprechendes Doppelband, zwischen dem die Wurstportion 4 gehalten und in Transportrichtung T₁ transportiert werden kann. Die Halteeinrichtung und die untere Transporteinrichtung werden dabei vorzugsweise mit gleicher Geschwindigkeit angetrieben. Vorteilhafterweise weist das Zuführtransportmittel 1 zumindest im Übergabebereich S₁, d.h. da, wo eine Ausstoßeinrichtung 3 die Wurstportion ausstößt, die Halteeinrichtung auf. Die Halteeinrichtung kann auch als Gleitblech oder federndes Gleitblech ausgebildet werden, wie nachfolgend noch näher in Zusammenhang mit Fig. 13 erläutert wird.

Wie aus Figur 2 hervorgeht, die einen Schnitt entlang der Linie I-I in Figur 1 zeigt (mit der Ausnahme, dass in dem Zuführtransportmittel in Figur 2 eine zusätzliche Wurstportion 4 dargestellt ist) weist auch das Abtransportmittel hier eine untere Transportreinrichtung 5 auf, sowie eine darüber liegende Halteeinrichtung 6. In diesem Ausführungsbeispiel sind die Transporteinrichtung 5 sowie die Halteeinrichtung 6 als umlaufende Transportbänder ausgebildet.

Der Abstand zwischen der unteren Transporteinrichtung 8, 5 und der Halteeinrichtung 7, 6 kann über einen nicht dargestellten Einstellmechanismus eingestellt werden und somit an ein bestimmtes Wurstkaliber angepasst werden. Dabei entspricht der Abstand zwischen Transporteinrichtung und Halteeinrichtung vorzugsweise 70 % bis 100 % des Wurstkalibers.

Bei der vorliegenden Erfindung ist es nicht notwendig, dass sich die Halteeinrichtung 6 des Abtransportmittels 2 über die gesamte Länge der Transporteinrichtung 5 erstreckt. Wesentlich ist nur, dass sich die Halteeinrichtung 6 oberhalb eines Anfangsbereichs a (siehe auch Figur 13a) der Transporteinrichtung 5 befindet. Durch die Halteeinrichtung 6 wird die entsprechende Wurstportion, die auf dem Zuführtransportmittel 1 in eine erste Transportrichtung T₁ bewegt wird, und auch bei der Übergabe noch eine Bewegungskomponente bzw. einen Impuls in Transportrichtung T₁ aufweist, wirksam abgebremst. Durch die Halteeinrichtung 6 kann die von dem Zuführtransportmittel 1 ausgestoßene Wurstportion 4 sicher aufgenommen und gehalten werden. Die Wurst kann eine korrekte Ausrichtung behalten. Dadurch, dass in diesem Ausführungsbeispiel auch das Zuführtransportmittel 1 zumindest im Übergabebereich eine Halteeinrichtung 7 aufweist, kann während des gesamten Übergabevorgangs die Wurstportion in einer korrekten Stellung gehalten und übergeben werden.

Die Ausstoßeinrichtung 3 ist dabei so ausgebildet, dass die Ausstoßfläche 3a, die hier parallel zur Transportrichtung T₁ ausgerichtet ist, durch den Zwischenraum zwischen Halteeinrichtung 7 und Transporteinrichtung 8 durchgeführt wird (siehe gestrichelte Linien), um die Wurstportionen von dem Zuführtransportmittel zu stoßen. Die Wurstportion 4 wird dann auf die untere Transporteinrichtung 5 gestoßen , von der Halteeinrichtung 6 gehalten und in Transportrichtung T2 weitertransportiert.

Wie bereits erwähnt, muss die Halteeinrichtung 6 zumindest im Anfangsbereich a (siehe Figur 13a), d.h. in einem Bereich von 0 bis 5 cm vom Vorderende des Abtransportmittels angeordnet sein. Wie aus Figur 13b hervorgeht, kann die Halteeinrichtung auch als Gleitblech 6 ausgebildet sein, das sich zumindest im Anfangsbereich a über der Transporteinrichtung 5 befindet. Das Gleitblech 6 kann federnd angeordnet sein, wie in Figur 13b dargestellt ist, um Schwankungen des Wurstkalibers zu kompensieren. Auch der Abstand des Gleitblechs 6 zur Transporteinrichtung 5 ist einstellbar. Wie aus Figur 13c hervorgeht, kann die Halteeinrichtung 6 auch in Form einer angetriebenen oder drehbar gelagerten Rolle ausgebildet sein, die ebenfalls im Anfangsbereich a angeordnet ist.

Figur 13d zeigt die Ausführung des Abtransportmittels als Doppelband mit einem unteren Transportband als Transporteinrichtung und einem oberen Transportmittel 6 als Halteeinrichtung.

Die in Zusammenhang mit Figuren 13a bis 13d gezeigten Ausführungsformen für eine Halteeinrichtung gelten auch für eine Halteeinrichtung 7 des Zuführtransportmittels, vorzugsweise sollte jedoch die Halteeinrichtung 7 des Zuführtransportmittels mitlaufend zum Zuführtransportmittel ausgebildet sein. Die Halteeinrichtung für das Zuführtransportmittel kann beispielsweise ein Transportband sein, mindestens eine Rolle, ein Rollenteppich oder ganz allgemein eine Einrichtung zum Andrücken der Wurstportionen auf das untere Transportband zur Verbesserung der Mitnahme.

Wie aus Figur 1 hervorgeht, bewegt sich hier die Ausstoßeinrichtung 3 senkrecht zur Transportrichtung T₁ hin und her. Es ist jedoch auch möglich, eine Schwenkeinrichtung vorzusehen, die es ermöglicht, dass die Ausstoßfläche 3a mit einer Schwenkbewegung (siehe Fig.12, Pfeil P₁) auf die Wurstportion 4 geschwenkt wird, um diese vom Zuführtransportmittel 1 auszustoßen und, wie durch Pfeil P₂ deutlich wird, nach dem Ausstoßen wieder in eine Ausgangsposition zurückverschwenkt werden kann. Als Schwenkmechanismus ist beispielsweise das in Figur 12 gezeigte Gelenkeparallelogramm geeignet, wobei das Ausstoßteil 13 mit der Ausstoßfläche 3a um die Achsen A₁ und A₂ beweglich mit den parallel angeordneten Schenkeln 14, 15 verbunden ist. Die Schenkel 14 und 15 sind jeweils drehbar um die Achsen A₃ und A₄ gelagert. Somit bleibt das Ausstoßteil 13 stets parallel zur Transportrichtung T₁ während der Schwenkbewegung.

Die Vorrichtung weist weiter vorteilhafterweise eine Steuerung auf, die einen Antrieb des Abtransportmittels 2, d.h. die Transporteinrichtung des Abtransportmittels und gegebenenfalls auch die Halteeinrichtung, derart steuert, dass es die Wurstportionen mit einer Geschwindigkeit V₂ transportiert, um einen vorbestimmten Abstand b der Wurstportionen 4 zueinander einzustellen. Die Steuerung steuert auch die Geschwindigkeit V₁ des Zuführtransportmittels 1. Weiter steuert die Steuerung auch die Funktionen der Ausstoßeinrichtung 3, d.h. den Zeitpunkt wann die Austoßeinrichtung eine Wurstportion ausstößt und die Geschwindigkeit der Ausstoßeinrichtung. Die Geschwindigkeit V₂ des Abtransportmittels 2 hängt beispielsweise von mindestens einem der folgenden Parameter ab: Transportgeschwindigkeit V₁ des Zuführtransportmittels 1, Taktfrequenz der Ausstoßeinrichtung 3, Wurstkaliber, vorbestimmter Sollabstand b der Wurstportionen in Transportrichtung T₂ des Abstransportmittels 2, Anzahl der an dieser Stelle ausgestoßenen Portionen. Somit kann gemäß der vorliegenden Erfindung der Abstand b zwischen Wurstportionen auf dem Abtransportmittel genau eingestellt werden. Auch diverse Gruppierungsaufträge, bei denen Wurstgruppen mit einem Abstand c erzeugt werden, können realisiert werden. Diese Geschwindigkeit V₂ kann zur Erzeugung unterschiedlicher Gruppenabstände oder für einen taktenden Betrieb variabel gestaltet werden. Weiter kann ein Anschlag 10 beispielsweise in Form eines Festanschlags zwischen der unteren Transporteinrichtung 5 und der darüberliegenden Halteeinrichtung 6 angeordnet sein um die Wurstportion 4, die von dem Zuführtransportmittel 1 übergeben wird, und noch einen Bewegungsimpuls in Transportrichtung T₁ aufweist, weiter abzubremsen und auszurichten. Anstatt eines Festanschlags 10 kann auch am seitlichen - in Transportrichtung T1 betrachtet- hinteren Rand 20 der Transporteinrichtung 5 bzw. der darüberliegenden Halteeinrichtung 6 ein senkrecht zur Transporteinrichtung 5 stehendes Transportband angeordnet sein, das als Anschlag dient, und gleichzeitig die Wurstportionsenden in Transportrichtung T₂ bewegt. Mit der Steuerung kann auch der Zeitpunkt eingestellt werden, wann die Ausstoßeinrichtung auf die Wurstportion trifft. Dadurch wird auch die Position bestimmt, wo die Wurstportion quer zur Transportrichtung T2 auf dem Transportmittel 2 zu liegen kommt. Dabei kennt die Steuerung die Position der Wurstportion in Abhängigkeit der Zeit.

Die Steuerung kennt entweder daher die Position der Wurstportion in Abhängigkeit der Zeit, da sie mit einer vorgeschalteten Vorrichtung, beispielsweise Füllmaschine, verbunden ist oder Teil dieser Einrichtung ist und daher Signale über die Positionen der Wurstportionen zu bestimmten Zeitpunkten erhält. Da auch die Geschwindigkeit des Zuführtransportmittels 1 und der Abstand zum jeweiligen Zuführtransportmittel 1 bekannt ist, kann genau der Zeitpunkt bestimmt werden, wann die ausgewählte Ausstoßeinrichtung auf die Wurstportion treffen soll, um diese abzustoßen. Dabei ist es vorteilhaft, wenn die Steuerung auch Signale bezüglich der Wurstportionslänge erhält, damit die Ausstoßeinrichtung 3 die Wurstportion ausstößt, wenn die Wurstportion direkt vor der Ausstoßfläche 3a liegt. Alternativ dazu kann auch eine Sensoreinrichtung vorgesehen sein, die in Fig. 1 beispielsweise durch das Bezugszeichen 80 angedeutet ist. Über diesen Sensor, beispielsweise einen optischen Sensor, kann das vordere und das hintere Ende der Wurstposition detektiert werden, woraus die Position der Wurstportion zu einem bestimmten Zeitpunkt ermittelt werden kann. Über den Abstand zur Ausstoßeinrichtung 3 und der Geschwindigkeit der Zuführeinrichtung 1 kann dann der exakte Zeitpunkt berechnet werden, zu dem beispielsweise die Mitte einer Wurstportion von der Mitte der Ausstoßfläche 3a (in Transportrichtung T₁ betrachtet) ausgestoßen werden kann. Somit kann die Genauigkeit der Ablageposition verbessert werden.

Die Position kann auch dadurch beeinflusst werden, dass die Ausstoßeinrichtung 3 mechanisch in Transportrichtung T₁ verschiebbar ist, auch während sich das Zuführtransportmittel 1 in Transportrichtung T₁ bewegt. Wenn die Ausstoßeinrichtung 3 oder aber zumindest ein Teil, das die Ausstoßfläche 3a aufweist, in den Figuren beispielsweise das Teil, das die Ausstoßfläche 3a umfasst, in Transportrichtung T₁ und in Gegentransportrichtung T₁ verschiebbar ist, kann stets gewährleistet werden, dass eine Wurstportion beim Ausstoßen mit ihrem mittleren Bereich im mittleren Bereich der Ausstoßfläche 3a liegt. Darüberhinaus kann die Position der Wurstportion auf dem Abtransportmittel 2 in Transportrichtung T₁ eingestellt werden.

Figur 3 zeigt das in Figur 1 gezeigte Ausführungsbeispiel mit einem anderen Gruppierungsauftrag. Während bei dem in Figur 1 gezeigten Gruppierungsauftrag die Würste hintereinander auf das Abtransportmittel 2 geschoben werden derart, dass sie einen konstanten vorbestimmten Abstand b voneinander aufweisen, werden in Fig. 3 mehrere Wurstgruppen 12a, b, c erzeugt, die jeweils eine bestimmte Anzahl von Einzelwurstportionen 4 aufweisen, wobei die Wurstgruppen ebenfalls einen bestimmten Abstand c voneinander aufweisen. Der Abstand c kann erzeugt werden, indem beispielsweise das Abtransportmittel 2, nachdem eine Wurstgruppe vollständig auf dem Abtransportmittel 2 abgelegt wurde, schneller bewegt wird, oder aber indem Wurstportionen 4 die Stelle S₁ passieren, ohne dass die Ausstoßeinrichtung 3 von der Steuerung angesteuert wird oder über einen bestimmten Zeitraum keine Würste über das Zuführtransportmittel antransportiert werden. Wenn der Abstand c zwischen den Wurstportionsgruppen erzielt worden ist, wird die Ausstoßeinrichtung 3 wieder angesteuert und stößt die Wurstpotionen der nächsten Gruppe ab.

Figur 4 zeigt einen Schnitt entlang der Linie I-I in der Figur 3, wobei jedoch auch hier in dem Zuführtransportmittel eine Wurstportion 4 dargestellt ist.

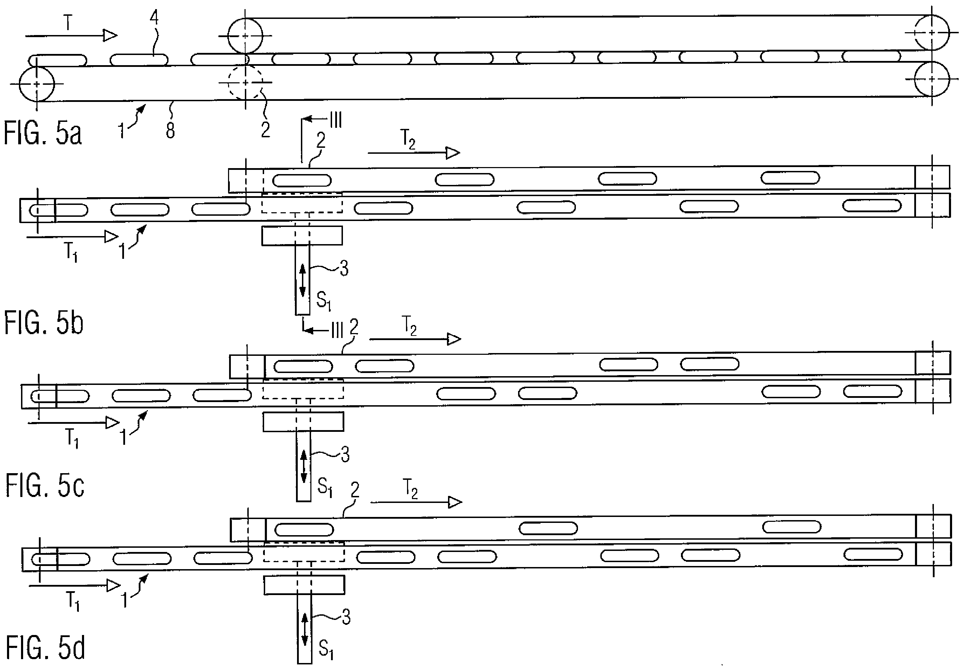

Die Figuren 5a bis d zeigen eine Ausführungsform die den vorherigen Ausführungsformen entspricht, bei der jedoch der Abtransportwinkel β = 0°, d.h. dass das Abtransportmittel 2 parallel zum Zuführtransportmittel 1 verläuft. Figur 5a zeigt einen Längsschnitt durch das Zuführtransportmittel 1, wobei das Zuführtransportmittel 1 über seiner Transporteinrichtung 8, hier Transportband, eine Halteeinrichtung 7, hier ebenfalls als Transportband ausgebildet, aufweist. Figur 5b ist ein Schnitt entlang der Liniell-II der Figur 5a. Aus Fig. 5b wird deutlich, dass das Abtransportmittel 2 parallel zum Zuführtransportmittel 1 angeordnet ist, wobei durch die Ausstoßeinrichtung 3 die Wurstportionen auf das Abtransportmittel 2 ausgestoßen werden können, wie zuvor beschrieben.

Die Figur 6 ist ein Schnitt entlang der Linie III-III der Figur 5b und zeigt, dass sowohl das Zuführtransportmittel als auch das Abtransportmittel 2 zumindest im Übergabebereich neben einer unteren Transporteinrichtung 5, hier einem Transportband, auch eine Halteeinrichtung 6, 7, hier ebenfalls in Form eines Transportbandes, aufweisen. Die Ausstoßeinrichtung 3 kann zwischen den jeweiligen Transporteinrichtung 5, 8 und Halteeinrichtungen 6, 7 hin und her bewegt werden, wie durch die Pfeile deutlich wird.

Wie aus Figur 5 hervorgeht, kann der Produktstrom hier aufgeteilt werden, wobei die Transportrichtung beibehalten wird und die Anzahl n der übergebenen Wurstportionen beliebig gewählt werden kann. In Figur 5b steuert die Steuerung die Ausstoßeinrichtung derart an, dass beispielsweise jede zweite Wurstportion übergeben wird. In Figur 5c werden jeweils 2 aufeinanderfolgende Wurstportionen ausgestoßen, dann passieren zwei Wurstportionen die Stelle S₁, ohne dass die Ausstoßeinrichtung 3 angesteuert wird usw. In Figur 5d wird eine Wurstportion ausgestoßen, zwei folgende Wurstportionen verbleiben auf dem Zuführtransportmittel und erst dann wird wieder eine entsprechende Wurstportion ausgestoßen. Beliebige Gruppierungen sind möglich.

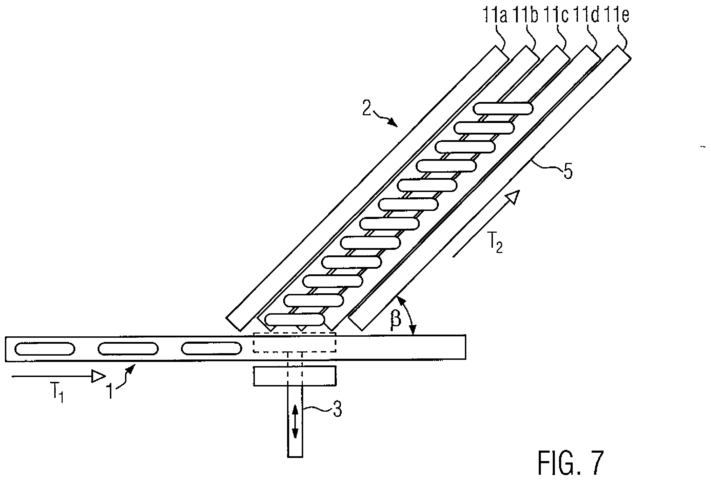

Figur 7 zeigt eine Ausführungsform, bei der das Abtransportmittel 2 die Wurstportionen in einer Richtung T₂ fördert, wobei T₂ unter einem Abtransportwinkel β von 45° zur Transportrichtung T₁ verläuft. Um auch in Winkelbereichen ungleich 90° und ungleich 0° mit dem Abtransportmittel 2 möglichst nah an das Zuführtransportmittel 1 anschließen zu können, sind hier mehrere parallel angeordnete Transportbänder 11a, b, c, d, e vorgesehen. Wie in Figur 7 gezeigt ist, weist die Transporteinrichtung 5 hier die mehreren nebeneinander angeordneten Transportbänder 11a bis e auf. Es ist auch möglich, dass die Halteeinrichtung mehrere nebeneinander angeordnete umlaufende Transportbänder aufweist, und sich dann zumindest im Anfangsbereich, wie zuvor erläutert, erstreckt. Vorzugsweise sind hier etwa zwei bis 10 Transportriemen oder -bänder vorgesehen, wobei die einzelnen Bänder jeweils 1 cm bis 5 cm breit sind.

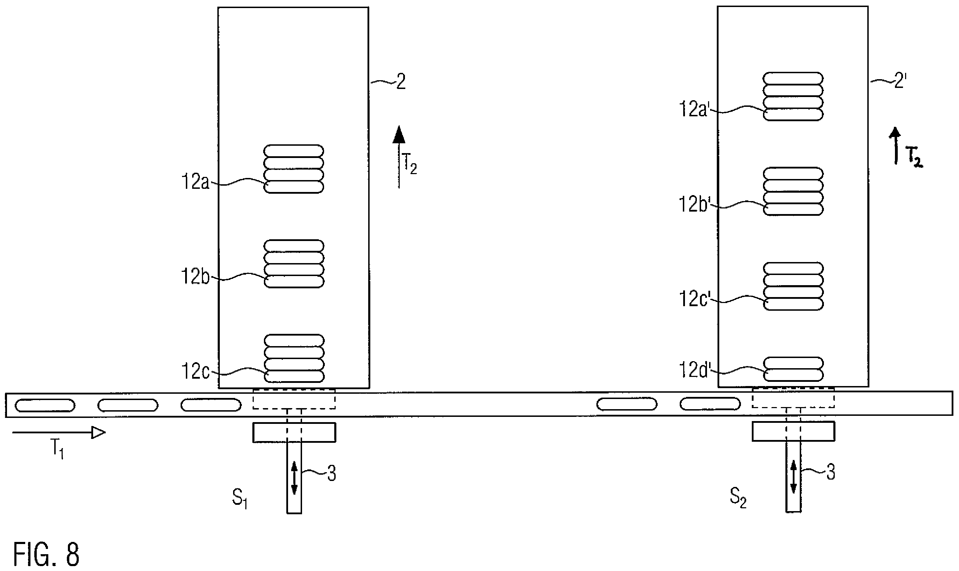

Figur 8 zeigt ein Ausführungsbeispiel, das im Wesentlichem dem vorhergehenden Ausführungsbeispielen entspricht, wobei hier die Wurstportionen an mehreren Stellen S₁, S₂ hintereinander auf das jeweilige Abtransportband 2, 2' ausgestoßen werden. Hier erfolgt das Ausstoßen jeweils zur gleichen Seite. Eine entsprechende Anordnung erlaubt das Aufteilen des Produktstroms, wobei durch Ausstoßen einer Wurstportion am ersten Ausstoßer 3 dadurch zeitverzögert am zweiten Ausstoßer 3' und dem dazugehörigen Abtransportmittel 2' eine Lücke entsteht. Werden am ersten Ausstoßer 3 gleich mehrere Portionen hintereinander ausgestoßen und die Geschwindigkeit des Abtransportmittels 2 so gewählt, dass die Portionen mit einem bestimmten Abstand b oder aber ohne Abstand dicht nebeneinander zu liegen kommen, ergeben sich auf den Abtransportbändern 2, 2' automatisch Gruppen 12, mit einer vorbestimmten Anzahl von Wurstportionen 4.

Dabei können n₁ Wurstportionen an der ersten Stelle S₁ hintereinander auf das Abtransportmittel 2 ausgestoßen werden, indem die Ausstoßeinrichtung n₂ mal hintereinander angesteuert wird. Wenn jeweils nur eine Wurstportion zu einem bestimmten Zeitpunkt von der Ausstoßeinrichtung ausgestoßen wird, wie in Figur 8 gezeigt ist, dann ergibt sich n₁=n₂. Bei diesem Gruppierungsauftrag ist n=4.

Anschließend wird eine bestimmte Menge n₃ an Wurstportionen an der ersten Stelle nicht von der Ausstoßeinrichtung ausgestoßen sondern passiert die Stelle S₁. Die passierenden Wurstportionen 4 werden dann an mindestens einer weiteren Stelle, hier an einer weiteren Stelle S₂ von einer entsprechenden Ausstoßeinrichtung 3' ausgestoßen. Durch Wahl der Geschwindigkeit des Abtransportmittels 2' ergeben sich auch hier Gruppen 12a', 12b', 12c' und 12d', die einen jeweiligen Abstand zueinander haben. In Figur 8 fehlen noch zwei Wurstportionen für die letzte Gruppe 12d', die von der Ausstoßeinrichtung 3 noch übergeben werden. Hier gilt n₃=n₂ und die Ausstoßeinrichtung 3' wird zur Erzeugung einer Gruppe ebenfalls n₂-mal angesteuert.

Wenn auch nicht dargestellt, wäre es möglich, dass Wurstportionen, die die erste Stelle S₁ passieren und nicht ausgestoßen werden und auch die zweite Stelle S₂ passieren und nicht ausgestoßen werden dann einer dritten Stelle oder mehreren Stellen zugeführt werden, um dann dort einem entsprechenden Abtransportmittel 2 übergeben zu werden.

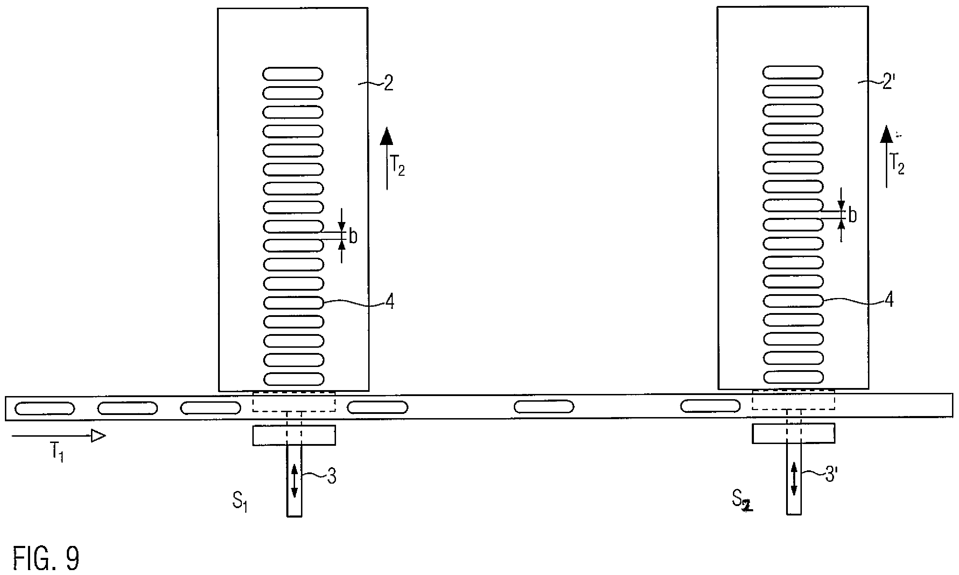

Figur 9 entspricht dem in Figur 8 gezeigten Ausführungsbeispiel mit einem anderen Gruppierungsauftrag. Hier wird an einer Stelle S₁ über eine erste Ausstoßeinrichtung 3 jede zweite Wurst auf das Abtransportmittel 2 ausgestoßen. Wie auch beim vorherigen Ausführungsbeispiel werden die nicht ausgestoßenen Wurstportionen dann an mindestens einer weiteren Stelle S₂ über eine weitere Ausstoßeinrichtung 3' ausgestoßen, in diesem Ausführungsbeispiel über eine zweite Ausstoßeinrichtung. Durch Wahl der Geschwindigkeiten der Abtransportmittel 2, 2' kann der Abstand b der Würste zueinander eingestellt werden.

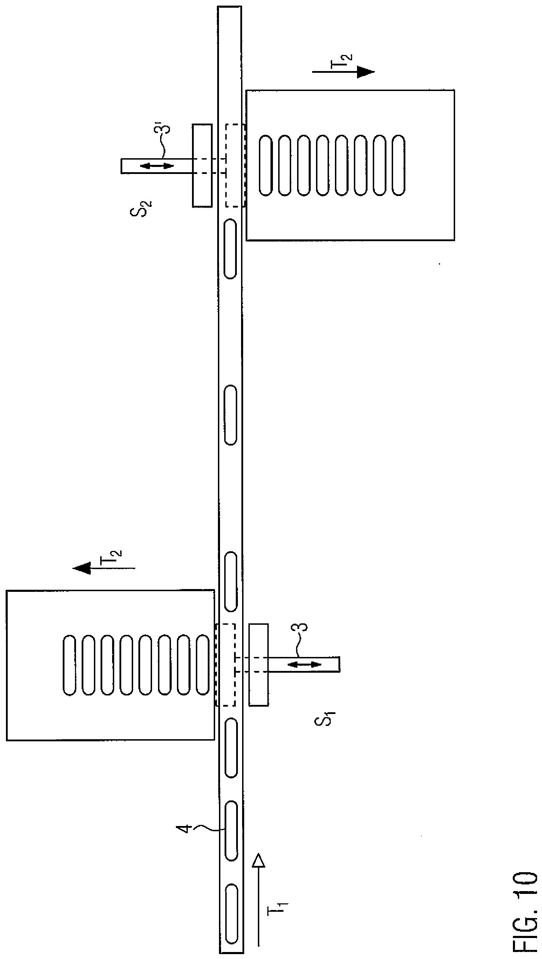

Figur 10 zeigt eine Ausführungsform, die im Wesentlichen den vorherigen Ausführungsbeispielen entspricht mit der Ausnahme, dass hier die Würste mehreren Stellen über entsprechende Ausstoßeinrichtungen 3, 3' in verschiedene Ausstoßrichtungen in Bezug auf das Zuführtransportmittel 1 ausgestoßen werden. Dazu sind die Ausstoßeinrichtungen 3, 3' auf verschiedenen Seiten des Zuführtransportmittels 1 angeordnet. Der Gruppierungsauftrag in Figur 10 entspricht dem Gruppierungsauftrag in Figur 9.

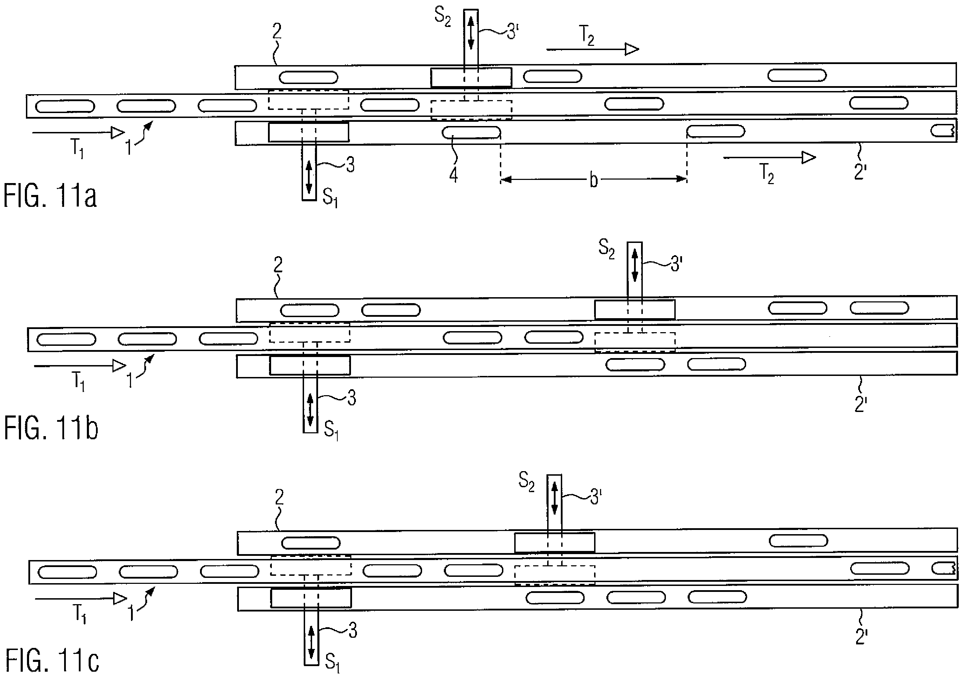

Figuren 11a bis 11c entsprechen einer weiteren Ausführungsform der vorliegenden Erfindung, bei der wie auch in Zusammenhang mit der Figur 5 erläutert der Abtransportwinkel β = 0° beträgt, d.h. dass das Abtransportmittel bzw. hier die beiden Abtransportmittel parallel zum Zuführtransportmittel verlaufen. Auch bei dieser Ausführungsform gibt es zwei Stellen S₁ und S₂, an denen die Wurstportionen von dem Zuführtransportmittel 1 auf das Abtransportmittel 2 ausgestoßen werden.

Die Ausstoßeinrichtung 3 kann zum Ausstoßen der Wurstportionen 4 von dem Zuführtransportmittel 1 entweder über das jeweilige Abtransportmittel 2 und das Zuführtransportmittel 1 bewegt werden oder, wenn eine jeweilige Halteeinrichtung vorgesehen ist, zwischen Transporteinrichtung und Halteeinrichtung geführt werden um die Wurstportion auf das Abtransportmittel 2' ausstoßen. Entsprechendes gilt für Ausstoßeinrichtung 3', die die Wurstportion von dem Zuführtransportmittel 1 auf das Abtransportmittel 2' überführen kann.

Hier kann der Produktstrom auf drei Bahnen aufgeteilt werden, wobei die Aufteilung gleichmäßig aber auch zahlenmäßig beliebig erfolgen kann. In Figur 11a wird jeweils eine Wurstportion auf das Abtransportmittel 2' geschoben, die nachfolgende Wurstportion verbleibt auf dem Zuführtransportmittel 1 und die dritte Wurstportion wird auf das Abtransportmittel 2 durch die Ausstoßeinrichtung 3' geschoben.

Figuren 11b und 11g zeigen weitere mögliche Gruppierungsmöglichkeiten.

Bei den Ausführungsbeispielen, bei den β=0° ist, sind die Wurstportionen in ihrer Längsrichtung in Transportrichtung T₂ ausgerichtet und nicht wie bei den anderen Ausführungsbeispielen quer bzw. schräg zur Transportrichtung T2, wobei wie bei den anderen Ausführungsbeispielen über die Geschwindigkeit bzw. das Geschwindigkeitsverhältnis des Zuführtransportmittels und des Abtransportmittels der Abstand b zwischen den einzelnen Wurstportionen beeinflusst werden kann.

Es ist auch möglich, dass fehlerhafte Produkte wie beispielsweise geplatzte oder von der gewünschten Länge oder von einer gewünschten Form abweichende Wurstportionen über eine entsprechende Detektionseinrichtung, zum Beispiel ein Kamerasystem, das ein aufgezeichnetes Bild mit einem Sollbild vergleicht, detektiert werden und ausgeschleust werden. Wird detektiert, dass es sich um ein fehlerhaftes Produkt handelt, wird eine Ausstoßeinrichtung nicht angesteuert und stößt die Wurstportion nicht auf das Abtransportmittel. Um zu verhindern, dass eine Lücke auf dem Abtransportmittel entsteht, kann die Geschwindigkeit des Abtransportmittels entsprechend angepasst werden, d.h. zum Beispiel die Geschwindigkeit kurz verzögert oder das Abtransportmittel kurz gestoppt werden. Die fehlerhaften Produkte können dann über das Zuführtransportmittel 1 ausgeschleust werden.

Es ist vorteilhaft wenn die Krümmungsrichtung der Würste detektiert wird und die Würste mit einer bestimmten Krümmungsrichtung auf ein entsprechendes Abtransportmittel 2 ausgestoßen werden, d.h. dass Wurstportionen mit einer entgegengesetzten Krümmungsrichtung auf ein weiteres Abtransportmittel ausgestoßen werden oder aber über das Zuführtransportmittel 1 abgeführt werden. Die Krümmung kann beispielsweise über ein Kamerasystem detektiert werden oder über eine Abstandsmessung, bei der der Abstand der Wurstoberfläche zu einem Bezugspunkt gemessen wird, wobei sich bei einer bestimmten Krümmung der Abstand über die Länge der Wurst entsprechend der Krümmung ändert.

Die Halteeinrichtung, insbesondere die Transportrolle oder das Transportband des Abtransportmittels 2 weist vorteilhafterweise keine glatte Oberfläche auf, sondern ein Oberflächenprofil, insbesondere Querrippen (wobei die Rippen senkrecht zur Transportrichtung T₂ ausgerichtet sind). Dies stellt sicher, dass die zum Zuführtransportmittel 1 übergebenen Würste gut von dem Abtransportmittel gegriffen werden können.

Bei dem erfindungsgemäßen Betriebverfahren für die in den Figuren 1-13 gezeigten Ausführungsformen wird mindestens eine Wurstportion bei der Übergabe vom Zuführtransportmittel (1) auf das Abtransportmittel (2) zwischen einer unteren Transporteinrichtung (5) des Abtransportmittels (3) und einer darüberliegenden Halteeinrichtung (5) gehalten und weiter transportiert.

Die Geschwindigkeiten v1, v2 und der bzw. die jeweilige Zeitpunkt(e) an dem die Außstoßeinrichtung(en) betätigt wird/werden sind frei einstellbar wobei eine Steuerung das Zuführtransportmittel 1, das mindestens eine Abtransportmittel 1 und die mindestens eine Ausstoßeinrichtung 3 derart ansteuert, dass auf dem mindestens einen Abtransportmittel 3 ein bestimmtes Gruppierungsmuster erzeugt wird.

Dazu kann in die Steuerung für das mindestens eine Abtransportmittel ein Gruppierungsauftrag eingegeben werden, wobei folgende Gruppierungsparameter für die jeweiligen Abtransportmittel eingegeben werden können:
Anzahl n an Wurstportionen in einer Gruppe 12,
Abstand b zwischen den Wurstportionen einer Gruppe 12;
Abstand c zwischen den Gruppen 12 .

Die Steuerung stimmt dann in Abhängigkeit dieser Parameter und einer Geschwindigkeit v1, die von der Produktionsgeschwindigkeit und von der Länge der Würste abhängt, die Funktionen des Abtransportbandes und der Ausstoßeinrichtung für den entsprechenden Gruppierungsauftrag ab und steuert die Vorrichtung entsprechend.

## Patentansprüche

1. Vorrichtung zur Übergabe von Wurstportionen (4) mit
einem Zuführtransportmittel (1),
mindestens einem Abtransportmittel (2), sowie
mindestens einer Ausstoßeinrichtung (3) zum Ausstoßen von mindestens einer Wurstportion (4) von dem Zuführtransportmittel (1) auf das Abtransportmittel (2), **dadurch gekennzeichnet, dass**
das Abtransportmittel (2) eine untere Transporteinrichtung (5) und eine darüberliegende Halteeinrichtung (6) aufweist, zwischen denen die mindestens eine Wurstportion (4) transportiert wird, und dass
die Vorrichtung eine Steuerung (9) umfasst, die einen Antrieb des Abtransportmittels (2) derart ansteuert, dass es die Wurstportionen mit einer Geschwindigkeit transportiert, um einen vorbestimmten Abstand der Wurstportionen einzustellen, wobei vorzugsweise die Geschwindigkeit von mindestens einem der folgenden Parameter abhängt:
Transportgeschwindigkeit des Zuführtransportmittels (1), Taktfrequenz der Ausstoßeinrichtung (3), Geschwindigkeit der Ausstoßeinrichtung (3), Wurstkaliber, eingestellter Soll-Abstand der Wurstportionen in einer Transportrichtung T₂ des Abtransportmittels (2), Anzahl der ausgestoßenen Portionen, eingestellter Soll-Abstand der Wurstgruppen in Transportrichtung T₂.

2. Vorrichtung nach Anspruch 1, **dadurch gekennzeichnet, dass** die Halteeinrichtung (6) zumindest oberhalb eines Anfangsbereichs der Transporteinrichtung (5) angeordnet ist.

3. Vorrichtung nach Anspruch 1 oder 2, **dadurch gekennzeichnet, dass** die Halteeinrichtung (6) als umlaufendes Transportmittel, insbesondere Transportband, Rolle oder Rollenteppich oder als Gleitblech oder federndes Gleitblech ausgebildet ist.

4. Vorrichtung nach mindestens einem der Ansprüche 1 bis 3, **dadurch gekennzeichnet, dass** der Abstand zwischen der Halteeinrichtung (6) und der Transporteinrichtung (5) einstellbar ist.

5. Vorrichtung nach mindestens einem der Ansprüche 1 bis 4, **dadurch gekennzeichnet, dass** das Zuführtransportmittel (1) zumindest im Übergabebereich eine Halteeinrichtung (7) über einer Transporteinrichtung (8) aufweist.

6. Vorrichtung nach mindestens einem der Ansprüche 1 bis 5, **dadurch gekennzeichnet, dass** die Vorrichtung mehrere hintereinander angeordnete Ausstoßeinrichtungen (3) aufweist.

7. Vorrichtung nach mindestens einem der Ansprüche 1 bis 6, **dadurch gekennzeichnet, dass** das mindestens eine Abtransportmittel (2) in einer zweiten Transportrichtung T₂ unter einem Winkel von 0 bis 100°, vorzugsweise 0 bis 90°, zur Transportrichtung T₁ des Zuführtransportmittels (1) verläuft.

8. Vorrichtung nach mindestens einem der Ansprüche 1 bis 7, **dadurch gekennzeichnet, dass** das mindestens eine Abtransportmittel (2) mehrere nebeneinander angeordnete umlaufende Transportbänder (11) aufweist.

9. Vorrichtung nach mindestens einem der Ansprüche 1 bis 8, **dadurch gekennzeichnet, dass** die Ausstoßeinrichtung (3) derart ausgebildet und angeordnet ist, dass sie in einer Richtung senkrecht zur Transportrichtung (T₁) des Zuführtransportmittels (1) bewegbar ist oder
in einer Richtung, die eine Bewegungskomponente senkrecht zur Transportrichtung T₁ des Zuführtransportmittels (1) sowie eine Bewegungskomponente entgegen der Transportrichtung T₁ des Zuführtransportmittels (1), aufweist und insbesondere einen Schwenkmechanismus umfasst, oder
die Ausstoßfläche (3a) der Ausstoßeinrichtung (3) schräg oder parallel zur Transportrichtung (T₁) des Zuführtransportmittels (1) ausgerichtet ist und insbesondere linear unter einem Winkel schräg zum Zuführtransportmittel (1) bewegbar ist.

10. Vorrichtung nach mindestens einem der Ansprüche 1 bis 9, **dadurch gekennzeichnet, dass** die Vorrichtung einen Anschlag (10) aufweist, der zumindest im Anfangsbereich des Abtransportmittels (3) angeordnet ist, und quer zur Transportrichtung (T₁) des Zuführtransportmittels steht, um die Wurstportionen (4) in Transportrichtung (T₁) des Zuführtransportmittels zu bremsen.

11. Verfahren zum Übergeben von Wurstportionen, insbesondere mit einer Vorrichtung nach mindestens einem der Ansprüche 1 bis 10, wobei mindestens eine Wurstportion (4) von einem Zuführtransportmittel (1) seitlich auf mindestens ein Abtransportmittel (2) ausgestoßen wird,
**dadurch gekennzeichnet, dass**
die mindestens eine Wurstportion (4) bei der Übergabe vom Zuführtransportmittel (1) auf das Abtransportmittel (2) zwischen einer unteren Transporteinrichtung (5) des Abtransportmittels (3) und einer darüberliegenden Halteeinrichtung (5) gehalten und transportiert wird, und dass
die Vorrichtung eine Steuerung (9) umfasst, die einen Antrieb des Abtransportmittels (2) derart ansteuert, dass es die Wurstportionen mit einer Geschwindigkeit transportiert, um einen vorbestimmten Abstand der Wurstportionen einzustellen, wobei vorzugsweise die Geschwindigkeit von mindestens einem der folgenden Parameter abhängt:
Transportgeschwindigkeit des Zuführtransportmittels (1), Taktfrequenz der Ausstoßeinrichtung (3), Geschwindigkeit der Ausstoßeinrichtung (3), Wurstkaliber, eingestellter Soll-Abstand der Wurstportionen in einer Transportrichtung T₂ des Abtransportmittels (2), Anzahl der ausgestoßenen Portionen, eingestellter Soll-Abstand der Wurstgruppen in Transportrichtung T₂.

12. Verfahren nach Anspruch 11, **dadurch gekennzeichnet, dass** die Wurstportionen (4) an mehreren Stellen (S1, S2, S3) seitlich vom Zuführtransportmittel (1) ausgestoßen werden,
- wobei an der ersten Stelle S₁ n₁ Wurstportion(en) hintereinander auf das Abtransportmittel (2) ausgestoßen werden, indem die Ausstoßeinrichtung (3) n₂-mal hintereinander angesteuert wird, und
- anschließend eine bestimmte Anzahl n₃ an Wurstportion(en) (4) die erste Stelle S₁ passieren, ohne von der Ausstoßeinrichtung ausgestoßen zu werden an mindestens einer weiteren Stelle (S₂, S₃) von einer entsprechenden Ausstoßeinrichtung ausgestoßen wird/werden.

13. Verfahren nach Anspruch 11 oder 12, **dadurch gekennzeichnet, dass** fehlerhafte Produkte detektiert und nicht auf das Abtransportmittel (2) übergeben werden und am Ende des Zuführtransportmittels (1) ausgeschleust werdenund dass die Steuerung die Anzahl der ausgeschleusten Produkte erkennt und die auf das Abtransportmittel (2) abgegebenen Wurstportionen durch Ausgleich der Anzahl der abgegebenen Wurstportionen wieder vervollständigt.

14. Verfahren nach mindestens einem der Ansprüche 11 bis 13, **dadurch gekennzeichnet, dass** die Krümmungsrichtung der Würste detektiert wird, und die Würste mit einer bestimmten Krümmungsrichtung auf ein entsprechendes Abtransportmittel (2) ausgestoßen werden.

15. Vorrichtung nach mindestens einem der Ansprüche 1 bis 10, **dadurch gekennzeichnet, dass** die Halteeinrichtung (6) insbesondere die Transportrolle oder das Transportband ein Oberflächenprofil aufweist.

16. Vorrichtung nach mindestens einem der Ansprüche 1 bis 10 und 15, **dadurch gekennzeichnet, dass** zumindest Teile der Ausstoßeinrichtung (3) in oder entgegengesetzt zur Transportrichtung (T₁) des Zuführtransportmittels bewegbar sind.

17. Vorrichtung nach mindestens einem der Ansprüche 1 - 10, 15 oder 16, **dadurch gekennzeichnet, dass** ein Sensor (80) die Position der Wurstposition und vorzugsweise eine Wurstlänge, zu einem Zeitpunkt ermitteln kann und die Steuerung in Abhängigkeit entsprechender Signale den Ausstoßzeitpunkt bestimmen und die Ausstoßeinrichtung (3) ansteuern kann.

## Claims

1. Device for transferring sausage portions (4) with
a supply transport device (1),
at least one removal transport device (2), and
at least one ejector (3) for ejecting at least one sausage portion (4) from said supply transport device (1) onto said removal transport device (2), **characterized in that**
said removal transport device (2) comprises a lower transport device (5) and a holding device (6) disposed thereabove between which said at least one sausage portion (4) is transported and **in that**
said device comprises a controller (9) actuating a drive of said removal transport device (2) such that it transports said sausage portions at a speed to adjust a predetermined distance between said sausage portions, where said speed preferably depends on at least one of the following parameters:
the transport speed of said supply transport device (1), the clock frequency of said ejector (3), the speed of said ejector (3), the sausage caliber, the set nominal distance of said sausage portions in a direction of transport T₂ of said removal transport device (2), the number of ejected portions, the set nominal distance of said sausage groups in the direction of transport T₂.

2. Device according to claim 1, **characterized in that** said holding device (6) is arranged at least above a starting region of said transport device (5).

3. Device according to claim 1 or 2, **characterized in that** said holding device (6) is formed as a circulating transport device, in particular a conveyor belt, a roller or a roller carpet or as a sliding plate or a resilient sliding plate.

4. Device according to at least one of the claims 1 to 3, **characterized in that** the distance between said holding device (6) and said transport device (5) is adjustable.

5. Device according to at least one of the claims 1 to 4, **characterized in that** said supply transport device (1) at least in the transfer region comprises a holding device (7) above a transport device (8).

6. Device according to at least one of the claims 1 to 5, **characterized in that** said device comprises several successively arranged ejectors (3).

7. Device according to at least one of the claims 1 to 6, **characterized in that** said at least one removal transport device (2) extends in a second direction of transport T₂ at an angle of 0 to 100°, preferably 0 to 90°, relative to the direction of transport T₁ of said supply transport device (1).

8. Device according to at least one of the claims 1 to 7, **characterized in that** said at least one removal transport device (2) comprises several adjacently disposed circulating conveyor belts (11).

9. Device according to at least one of the claims 1 to 8, **characterized in that** said ejector (3) is configured and arranged such that it is movable in a direction perpendicular to the direction of transport (T₁) of said supply transport device (1) or
in a direction having a component of motion perpendicular to the direction of transport T₁ of said supply transport device (1) and a component of motion opposite to the direction of transport T₁ of said supply transport device (1), and comprises in particular a pivot mechanism, or
said ejection area (3a) of said ejector (3) is oriented at an angle or parallel to the direction of transport (T₁) of said supply transport device (1) and is in particular movable linearly at an angle inclined relative to said supply transport device (1).

10. Device according to at least one of the claims 1 to 9, **characterized in that** said device comprises a stop (10) which is arranged at least in the starting region of said removal transport device (3) and is positioned transverse to the direction of transport (T₁) of said supply transport device in order to decelerate said sausage portions (4) in the direction of transport (T₁) of said supply transport device.

11. Method for transferring sausage portions, in particular with a device according to at least one of the claims 1 to 10, wherein at least one sausage portion (4) is ejected from a supply transport device (1) laterally onto at least one removal transport device (2), **characterized in that**
said at least one sausage portion (4) is during the transfer from said supply transport device (1) onto said removal transport device (2) held and further transported between a lower transport device (5) of said removal transport device (3) and a holding device (5) disposed thereabove and **in that**
said device comprises a controller (9) actuating a drive of said removal transport device (2) such that it transports said sausage portions at a speed to adjust a predetermined distance between said sausage portions, where said speed preferably depends on at least one of the following parameters:
the transport speed of said supply transport device (1), the clock frequency of said ejector (3), the speed of said ejector (3), the sausage caliber, the set nominal distance of said sausage portions in a direction of transport T₂ of said removal transport device (2), the number of ejected portions, the set nominal distance of said sausage groups in the direction of transport T₂.

12. Method according to claim 11, **characterized in that** said sausage portions (4) are ejected at several locations (S1, S2, S3) laterally from said supply transport device (1),
- where n₁ sausage portion(s) can be ejected successively at said first location S₁ onto said removal transport device (2), **in that** said ejector (3) is actuated successively n₂ times, and
- a certain number n₃ of sausage portion(s) (4) passing said first location S₁ without being ejected by said ejector is/are ejected at at least one further location (S₂, S₃) by a respective ejector.

13. Method according to claim 11 or 12, **characterized in that** that faulty products are detected and not transferred onto said removal transport device (2) and discharged at the end of said supply transport device (1), and that said controller detects the number of discharged products and again completes said sausage portions transferred onto said removal transport device (2) by balancing the number of sausage portions.

14. Method according to at least one of the claims 11 to 13, **characterized in that** the direction of curvature of said sausages is detected and said sausages having a certain direction of curvature are ejected onto a respective removal transport device (2).

15. Device according to at least one of the claims 1 to 10, **characterized in that** said holding device (6), in particular said transport roller or said transport belt, has a surface profile.

16. Device according to at least one of the claims 1 to 10 and 15, **characterized in that** at least parts of said ejector (3) are movable in or opposite to the direction of transport (T₁) of said supply transport device.

17. Device according to at least one of claims 1-10,15 or 16, **characterized in that** a sensor (80) can determine the position of said sausage portion and preferably a sausage length at a point in time, and said controller can in dependence of respective signals determine the ejection timing and actuate said ejector (3).

## Revendications

1. Dispositif destiné au transfert de portions de saucisses (4) comprenant :
- un moyen de transport pour l'entrée (1) ;
- au moins un moyen de transport pour la sortie (2) ; ainsi que
- au moins un moyen d'éjection (3), lequel est destiné à l'éjection d'au moins une portion de saucisses (4) du moyen de transport pour l'entrée (1) sur le moyen de transport pour la sortie (2) ;
**caractérisé en ce que**
le moyen de transport pour la sortie (2) présente un mécanisme de transport (5) inférieur et un mécanisme de retenue (6), lequel se trouve au-dessus, entre lesquels mécanismes est transportée l'au moins une portion de saucisses (4) ; et
**caractérisé en ce que**
le dispositif comprend une commande (9), laquelle commande un entraînement du moyen de transport pour la sortie (2), de telle sorte que ledit moyen de transport pour la sortie permet de transporter les portions de saucisses à une certaine vitesse en vue de régler une distance prédéterminée entre les portions de saucisses ;
selon lequel la vitesse dépend de préférence d'au moins l'un des paramètres suivants :
la vitesse de transport du moyen de transport pour l'entrée (1), la fréquence des impulsions du moyen d'éjection (3), la vitesse du moyen d'éjection (3), le calibre des saucisses, la distance de consigne préalablement réglée des portions de saucisses dans une direction de transport T₂ du moyen de transport pour la sortie (2), le nombre de portions éjectées, la distance de consigne préalablement réglée des groupes de saucisses dans la direction de transport T₂.

2. Dispositif selon la revendication 1, **caractérisé en ce que** le mécanisme de retenue (6) est disposé tout au moins au-dessus d'une zone de départ du mécanisme de transport (5).

3. Dispositif selon la revendication 1 ou 2, **caractérisé en ce que** le mécanisme de retenue (6) est conçu sous la forme d'un moyen de transport à mouvement tournant continu, en particulier d'une bande de transport, de rouleaux ou de tapis en rouleaux ou sous la forme d'une tôle coulissante ou d'une tôle coulissante qui est montée de manière élastique.

4. Dispositif selon tout au moins l'une des revendications 1 à 3, **caractérisé en ce que** la distance entre le mécanisme de retenue (6) et le mécanisme de transport (5) peut être réglée.

5. Dispositif selon tout au moins l'une des revendications 1 à 4, **caractérisé en ce que** le moyen de transport pour l'entrée (1) présente tout au moins un mécanisme de retenue (7) dans la zone de transfert, par l'intermédiaire d'un mécanisme de transport (8).

6. Dispositif selon tout au moins l'une des revendications 1 à 5, **caractérisé en ce que** le dispositif présente plusieurs moyens d'éjection (3), lesquels sont disposés les uns à la suite des autres.

7. Dispositif selon tout au moins l'une des revendications 1 à 6, **caractérisé en ce que** l'au moins un moyen de transport pour la sortie (2) court dans une deuxième direction de transport T₂ dans un angle compris entre 0 et 100°, de préférence entre 0 et 90°, par rapport à la direction de transport T₁ du moyen de transport pour l'entrée (1).

8. Dispositif selon tout au moins l'une des revendications 1 à 7, **caractérisé en ce que** l'au moins un moyen de transport pour la sortie (2) présente plusieurs bandes de transport (11) à mouvement tournant continu, lesquelles sont disposées les unes à côté des autres.

9. Dispositif selon tout au moins l'une des revendications 1 à 8, **caractérisé en ce que** le moyen d'éjection (3) est conçu et disposé de telle sorte qu'il est mobile dans une direction qui se trouve à la perpendiculaire de la direction de transport (T₁) du moyen de transport pour l'entrée (1) ; ou
**caractérisé en ce que** le moyen d'éjection est conçu et disposé de telle sorte qu'il est mobile dans une direction qui présente une composante de mouvement qui se trouve à la perpendiculaire de la direction de transport T₁ du moyen de transport pour l'entrée (1), ainsi qu'une composante de mouvement qui se situe en sens inverse de la direction de transport T₁ du moyen de transport pour l'entrée (1), et le moyen d'éjection comprend en particulier un mécanisme de pivotement ; ou
la surface d'éjection (3a) du moyen d'éjection (3) est orientée de manière inclinée ou
parallèle par rapport à la direction de transport (T₁) du moyen de transport pour l'entrée (1) et, en particulier, peut être déplacée de manière linéaire dans un angle incliné par rapport au moyen de transport pour l'entrée (1).

10. Dispositif selon tout au moins l'une des revendications 1 à 9, **caractérisé en ce que** le dispositif présente une butée (10), laquelle est disposée tout au moins dans la zone de départ du moyen de transport pour la sortie (3), et laquelle se trouve à la transversale par rapport à la direction de transport (T₁) du moyen de transport pour l'entrée, en vue de freiner les portions de saucisses (4) dans la direction de transport (T₁) du moyen de transport pour l'entrée.

11. Procédé destiné au transfert de portions de saucisses, comprenant en particulier un dispositif selon tout au moins l'une des revendications 1 à 10, selon lequel au moins une portion de saucisses (4) est éjectée de manière latérale d'un moyen de transport pour l'entrée (1) sur au moins un moyen de transport pour la sortie (2) ;
**caractérisé en ce que**
pendant le transfert, l'au moins une portion de saucisses (4) est maintenue et transportée du moyen de transport pour l'entrée (1) sur le moyen de transport pour la sortie (2) entre un mécanisme de transport (5) inférieur du moyen de transport pour la sortie (3) et un mécanisme de retenue (5), lequel se trouve au-dessus ; et
**caractérisé en ce que**
le dispositif comprend une commande (9), laquelle commande un entraînement du moyen de transport pour la sortie (2), de telle sorte que ledit moyen de transport pour la sortie permet de transporter les portions de saucisses à une certaine vitesse en vue de régler une distance prédéterminée entre les portions de saucisses ;
selon lequel la vitesse dépend de préférence d'au moins l'un des paramètres suivants :
la vitesse de transport du moyen de transport pour l'entrée (1), la fréquence des impulsions du moyen d'éjection (3), la vitesse du moyen d'éjection (3), le calibre des saucisses, la distance de consigne préalablement réglée des portions de saucisses dans une direction de transport T₂ du moyen de transport pour la sortie (2), le nombre de portions éjectées, la distance de consigne préalablement réglée des groupes de saucisses dans la direction de transport T₂.

12. Procédé selon la revendication 11, **caractérisé en ce que** les portions de saucisses (4) sont éjectées, de manière latérale, en plusieurs emplacements (S1, S2, S3) du moyen de transport pour l'entrée (1) ;
selon lequel une ou plusieurs portions de saucisses sont éjectées les unes à la suite des autres au niveau du premier emplacement S₁ n₁, sur le moyen de transport pour la sortie (2), en ce sens que le moyen d'éjection (3) n₂-mal est commandé de manière consécutive ; et
selon lequel un nombre n₃ déterminé de la ou des portions de saucisses (4) passent ensuite le premier emplacement S₁, sans être éjectées du moyen d'éjection, et sont éjectées au niveau d'au moins un autre emplacement (S₂, S₃) par un moyen d'éjection correspondant.

13. Procédé selon la revendication 11 ou 12, **caractérisé en ce que** les produits défectueux sont détectés et ne sont pas transférés sur le moyen de transport pour la sortie (2) et sont exclus à l'extrémité du moyen de transport pour l'entrée (1) ; et **caractérisé en ce que** la commande identifie le nombre de produits exclus et complète de nouveau les portions de saucisses transférées sur le moyen de transport pour la sortie (2) en compensant le nombre des portions de saucisses transférées.

14. Procédé selon tout au moins l'une des revendications 11 à 13, **caractérisé en ce que** la direction de la courbure des saucisses est détectée et les saucisses sont éjectées sur un moyen de transport pour la sortie (2) correspondant avec une direction de courbure déterminée.

15. Dispositif selon tout au moins l'une des revendications 1 à 10, **caractérisé en ce que** le mécanisme de retenue (6) présente en particulier des rouleaux de transport ou **en ce que** la bande de transport présente un profilé de surface.

16. Dispositif selon tout au moins l'une des revendications 1 à 10 et 15, **caractérisé en ce que** tout au moins des pièces du moyen d'éjection (3) peuvent être déplacées dans la même direction de transport (T₁) du moyen de transport pour l'entrée ou dans la direction de transport inverse du moyen de transport pour l'entrée.

17. Dispositif selon tout au moins l'une des revendications 1 à 10, 15 ou 16, **caractérisé en ce qu'**un capteur (80) est en mesure de détecter la position des saucisses et, de préférence, une longueur de saucisse à un moment déterminé et la commande est en mesure de déterminer le moment de l'éjection en fonction de signaux correspondants et de commander le moyen d'éjection (3) en conséquence.
